## Europäisches Patentamt
## European Patent Office
## Office européen des brevets

(19)

(11) Publication number: **0 184 900**
**A1**

(12) **EUROPEAN PATENT APPLICATION**

(21) Application number: **85307760.0**

(22) Date of filing: **28.10.85**

(51) Int. Cl.⁴: **C 01 G 23/047,** B 01 J 13/00,
C 01 F 7/02, C 01 G 25/02,
C 04 B 35/10, C 04 B 35/46,
C 04 B 35/48

(30) Priority: **01.11.84 GB 8427655**

(43) Date of publication of application: **18.06.86**
**Bulletin 86/25**

(84) Designated Contracting States: **BE DE FR IT SE**

(71) Applicant: **UNITED KINGDOM ATOMIC ENERGY
AUTHORITY, 11 Charles II Street, London SW1Y 4QP
(GB)**

(72) Inventor: **Woodhead, James Louis, 79 Queensway,
Didcot Oxfordshire (GB)**
Inventor: **Dalton, John Townsend, Copperfields Nursery
Gardens, Purley-on-Thames Reading, Berkshire (GB)**

(74) Representative: **Bennett, Clive Stephen, United Kingdom
Atomic Energy Authority Patent Branch 11, Charles II
Street, London, SW1Y 4Qp (GB)**

(54) Process for the preparation of synthetic rock material and precursor therefor.

㉝ The invention provides a process for preparing a synthetic rock material which includes the step of gelling a feed material to produce a precursor for the synthetic rock material. The feed material includes appropriate chemical compounds for the formation of a given composition of synthetic rock material and at least one of the chemical compounds is in the form of a colloidal dispersion of a hydrated chemical compound.

The hydrated chemical compound may be for example hydrated titanium dioxide.

In accordance with the present invention it is possible to produce a precursor having a density of greater than 1 g. ml⁻¹.

Synthetic rock material in accordance with the present invention may be used in connection with the immobilisation of radioactive waste.

## Improvements in or relating to materials

The present invention relates to materials and more particularly to synthetic rock materials.

According to one aspect of the present invention there is provided a process for the preparation of a synthetic rock material which includes the step of gelling a feed material thereby to form a precursor for the synthetic rock material, said feed material comprising appropriate chemical compounds (as hereinafter defined) and at least one of the chemical compounds being in the form of a colloidal dispersion of a hydrated chemical compound.

It is to be understood that "appropriate chemical compounds" as used in this Specification means chemical compounds which are appropriate for providing the required chemical composition of the synthetic rock material when formed.

For example if it is desired to have oxides of titanium, aluminium and zirconium in the synthetic rock material when formed the feed material will contain compounds of titanium, aluminium and zirconium as "appropriate chemical compounds".

In one embodiment of the present invention the feed material includes titanium dioxide in the form of a colloidal dispersion of hydrated titanium dioxide.

It is preferred that the colloidal dispersion of hydrated titanium oxide is a sol as disclosed in British Patent Specification Number 1412937.

Other appropriate chemical compounds may be present in the feed material as colloidal dispersions; thus for example, in addition to a colloidal dispersion of hydrated titanium dioxide the feed material may contain a colloidal dispersion of zirconia (e.g. such as a sol disclosed in British Patent Specification Number 1181794) (US 3518050, US 3645910) and/or a colloidal dispersion of alumina (e.g. a sol as disclosed in British Patent Specification Number 1193258).

The precursor may be further treated to produce a synthetic rock material by pressing and heating (firing).

Synthetic rock materials have been proposed for use in the immobilisation of radioactive wastes and in this context reference may be made for example to "Safe disposal of high level nuclear reactor wastes : A new strategy" by A.E. Ringwood (Australian National University Press, Canberra, Australia and Norwalk, Conn., U.S.A. 1978) wherein reference is made, _inter alia_, to a synthetic analogue of a natural igneous rock.

In certain known processes for the preparation of synthetic rock materials the precursor produced is of a relatively low density and this can give rise to difficulties during the pressing and firing when it is desired to obtain a high density synthetic rock material.

In accordance with the present invention it is possible to produce a precursor which has a (tap) density of greater than 1 g. $ml^{-1}$. Such a precursor may be pressed to give a synthetic rock material of substantially theoretical density.

It is believed that the choice of colloidal dispersions including hydrated chemical compounds is a contributing factor in achieving a precursor of high density since in such colloidal dispersions the chemical compounds are in a non-aggregated form and have small crystallite sizes of a shape and character such that packing can occur to give a dense precursor for a synthetic rock material.

By way of example precursors have been prepared, in accordance with the present invention, which have a tap density in the range 1.3 g. $ml^{-1}$ to 1.35 g. $ml^{-1}$. By way of further example precursors have been prepared, in accordance with the present invention, which have a density in the range 1.6 - 1.7 g. $ml^{-1}$.

The precursor may be, for example, heated at relatively low temperature (e.g. about 400°C) to give a heat-treated precursor suitable for further heating and pressing to give a synthetic rock material. By way of example, heat-treated precursors have been prepared in accordance with present invention which have a density in the range 1.8 - 2.0 g. $ml^{-1}$.

The feed material may be gelled to give the precursor by any suitable means. Any method giving rise to a sol-gel transformation is in principle applicable to the gelation of the feed material in accordance with the present invention. For example the gelling may be carried out by dewatering (e.g. by evaporation or organic dewatering). By way of further example the feed material may be dispersed as droplets in an immiscible organic liquid and subsequently gelled by use of a long chain aliphatic amine or ammonia gas (for example as disclosed in British Patent Specification No. 1266494). By way of further example the gelling may be carried out by evaporation. By way of yet further example, a sol-gel transformation may be effected using spray drying.

In accordance with another aspect of the present invention there is provided a precursor for a synthetic rock material said precursor having a density of greater than 1 g. ml$^{-1}$.

The present invention will now be further described by way of example only as follows:

Example 1

A feed material was prepared with appropriate composition for the preparation of a precursor for a synthetic rock material comprising approximately 60 w/o Hollandite (65.5% $TiO_2$, 13.9% $Al_2O_3$ 20.2% BaO) and 40 w/o Zironolite (47.5% $TiO_2$, 36.0% $ZrO_2$ 16.5% CaO).

Thus a feed material was prepared with the following proportions as the objective : 58.3% $TiO_2$, 14.4% $ZrO_2$, 12.1% BaO, 8.3% $Al_2O_3$ and 6.6% CaO as follows:

20 ml ( $\sim$ 6g $TiO_2$) of $TiO_2$ sol (as disclosed in British Patent Specification No. 1412937) were mixed with 3ml ( $\sim$ 1.5g $ZrO_2$) of $ZrO_2$ sol (as disclosed in British Patent Specification No. 1181794) and with 10 ml ( $\sim$ 1g $Al_2O_3$) of an alumina sol (as disclosed in British Patent Specification No. 1193258) by stirring for $\sim$ 10 minutes.

(No increase in viscosity and no coagulation was observed).

Barium acetate (2g) (1.2g BaO) was disolved in water and added to the mixture of sols prepared above to give a mixture. Only a slight tendency to coagulate was observed and viscosity increased. The mixture was "stabilised" by a few drops of concentrated nitric acid.

0.65g CaO was added to the mixture as slightly acid calcium nitrate solution ( $\sim$ 5ml).

The resulting feed material became thixotropic after 10 minutes and remained unchanged for the next 2 hours.

The volume was $\sim$ 40ml, the density was 1.17g. $ml^{-1}$ and the pH was 2.4. The total oxide content was $\sim$ 250 g. $l^{-1}$ ($TiO_2$ 58%, $ZrO_2$ 14%, $Al_2O_3$ 9%, BaO 11% and CaO 6%).

Example 2

Feed material ( $\sim$ 15ml) prepared as in Example 1 was dispersed by stirring in 300ml of immiscible organic liquid (1.1.1 trichloroethane) ("Genklene" Trade Mark) containing 3.0 ml of surfactant (Span 80 Trade Mark) and gelled by addition of $NH_3$ gas as disclosed in British Patent Specification No. 1266494).

The resulting spherical gel particles were separated from the organic liquid, washed in acetone and air dried.

The resulting particles which were 50 - 100 $\mu$ m (dia) were heated at $\sim$400 - 500°C for 5 mins after which they were crushed by light pressure to give a powder precursor of tap density $\sim$1.3 g. $ml^{-1}$.

Example 3

Feed material ( $\sim$ 20ml) prepared as in Example 1 was rapidly evaporated in a dish, heated to $\sim$400 - 500°C for 5 mins and the then crushed by light pressure to give a powder precursor of tap density 1.35g $ml^{-1}$.

### Example 4

Powder precursor prepared as in Example 3 was hot pressed under vacuum at a pressure of 2.3 Kg mm$^{-2}$ for one hour at 1150°C to give a synthetic rock material having a pressed density of 4.18 g. ml$^{-1}$ ( $\sim$ 95% Theoretical Density).

Claims:

1. A process for the preparation of a synthetic rock material which includes the step of gelling a feed material thereby to form a precursor for the synthetic rock material, said feed material comprising appropriate chemical compounds (as hereinbefore defined) and at least one of the chemical compounds being in the form of a colloidal dispersion of a hydrated chemical compound.

2. A process as claimed in claim 1 wherein the feed material includes titanium dioxide in the form of a colloidal dispersion of hydrated titanium dioxide.

3. A process as claimed in claim 1 or claim 2 wherein the feed material contains a colloidal dispersion of zirconia.

4. A process as claimed in claim 1 or claim 2 wherein the feed material contains a colloidal dispersion of alumina.

5. A process as claimed in any one of the preceding claims wherein the precursor is further treated to produce a synthetic rock material by pressing and heating.

6. A process as claimed in any one of the preceding claims wherein the precursor has a tap density of greater than 1 g. ml$^{-1}$.

7. A process as claimed in any one of the preceding claims wherein the precursor has a tap density in the range 1.3 g. ml$^{-1}$ to 1.35 g. ml$^{-1}$.

8. A process as claimed in any one of the preceding claims wherein the feed material is gelled by a sol-gel transformation.

0184900

9.   A precursor for a synthetic rock material said precursor having a density of greater than 1 g. ml$^{-1}$.

10.   A precursor for a synthetic rock material as claimed in claim 9 wherein the precursor has a density in the range 1.3 g. ml$^{-1}$ to 1.35 g. ml$^{-1}$.

13755 BtH

## EUROPEAN SEARCH REPORT

Application number

EP 85 30 7760

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl.4) |
| X | GB-A-1 192 096 (UK ATOMIC ENERGY AUTHORITY) * claims 1, 2, 4, 5; page 2, lines 5-11, 35-40 * | 1-5,8 | C 01 G 23/04 B 01 J 13/00 C 01 F 7/02 C 01 G 25/02 C 04 B 35/10 C 04 B 35/46 C 04 B 35/48 |
| | --- | | |
| X | EP-A-0 093 212 (REMET CORP.) * claims 1-7; abstract; page 3, lines 30-32 * | 1,3,5, 8 | |
| | --- | | |
| D,A | GB-A-1 412 937 (UK ATOMIC ENERGY AUTHORITY) * claims 1, 3, 14, 17, 19 * | 1-3,5, 8 | |
| | --- | | |
| D,A | GB-A-1 193 258 (UK ATOMIC ENERGY AUTHORITY) * claims 1, 5-8, 10 * | 1,4,5, 8 | TECHNICAL FIELDS SEARCHED (Int. Cl.4) |
| | --- | | |
| D,A | GB-A-1 181 794 (UK ATOMIC ENERGY AUTHORITY) * claims 1, 3, 5-9; page 3, experiments 4, 5 * | 1,3,5, 8 | B 01 J 13/00 C 01 F 7/02 C 01 G 23/00 C 01 G 25/00 C 04 B 35/10 C 04 B 35/46 C 04 B 35/48 C 04 B 35/49 |
| | ----- | | |

The present search report has been drawn up for all claims

| Place of search | Date of completion of the search | Examiner |
|---|---|---|
| BERLIN | 28-01-1986 | STROUD J.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82